Europäisches Patentamt

European Patent Office

Office européen des brevets

(11) Veröffentlichungsnummer: **0 487 770 A1**

## EUROPÄISCHE PATENTANMELDUNG

(21) Anmeldenummer: **90122725.6**

(22) Anmeldetag: **28.11.90**

(51) Int. Cl.5: **F27B 14/06**, H05B 3/60, C21B 7/02

(43) Veröffentlichungstag der Anmeldung:
**03.06.92 Patentblatt 92/23**

(84) Benannte Vertragsstaaten:
**AT BE CH DE DK ES FR GB GR IT LI LU NL SE**

(71) Anmelder: **ASEA BROWN BOVERI AG**

**CH-5401 Baden(CH)**

(72) Erfinder: **Jodeit, Harald, Dr.**
**W.v.Schienenstrasse 14**
**W-7890 Waldshut 1(DE)**

Erfinder: **Jochum, Joachim, Dr.**
**Pilgerstrasse 20**
**CH-5405 Baden(CH)**
Erfinder: **Schmidl, Erwin, Dr.**
**Kreuzäckerweg 8**
**CH-5442 Fislisbach(CH)**
Erfinder: **Simon, Franz-Georg, Dr.**
**Brückenstrasse 10**
**CH-5430 Wettingen(CH)**
Erfinder: **Wieckert, Christian, Dr.**
**Pilgerstrasse 2**
**CH-5405 Baden(CH)**

(54) **Schmelzofen zur thermischen Behandlung von schwermetallhaltigen und/oder dioxinhaltigen Sonderabfällen.**

(57) Zur Verbesserung der Durchsatzleistung eines Schmelzofen zur thermischen Behandlung von schwermetallhaltigen und/oder dioxinhaltigen Sonderabfällen, mit einem Ofengefäss, das eine Schmelzwanne zur Aufnahme einer Schmelze, eine Beschickungsvorrichtung (6,7) für die Zufuhr des zu behandelnden Gutes, einen Schmelzaustrag (9) und einen Abgasauslass (11) aufweist aufweist, ist neben der von oben in das Gefässinnere hineinragenden Heizvorrichtung (12) eine Widerstandsheizung in Gestalt von direkt auf die Schmelze (8) einwirkenden Badelektroden (15) vorgesehen. Diese führen nicht nur Energie der Schmelze zu, sondern fördern durch die vom Stromfluss verursachte Badbewegung den Wärmeaustausch in der Schmelze.

FIG.1

EP 0 487 770 A1

TECHNISCHES GEBIET

Bei der Erfindung wird ausgegangen von einem Schmelzofen zur thermischen Behandlung von schwermetallhaltigen und/oder dioxinhaltigen Sonderabfällen, mit einem Ofengefäss, das eine Schmelzwanne zur Aufnahme einer Schmelze, mindestens eine Beschickungsvorrichtung für die Zufuhr des zu behandelnden Gutes, mindestens einen von der Beschickungsvorrichtung räumlich distanzierten Schmelzaustrag und mindestens eine in das Gefässinnere hineinragenden erste Heizvorrichtung und mindestens einen Abgasauslass aufweist.

Ein Schmelzofen dieser Bauart ist beispielsweise aus der Europäischen Patentanmeldung mit der Veröffentlichungsnummer 0 359 931 bekannt.

STAND DER TECHNIK

Bei dem bekannten Verfahren zur Abtrennung von giftigen, flüchtigen chemischen Verbindungen aus einem Gemenge von festen Partikeln wird Elektrofilterstaub von industriellen Verbrennungsanlagen mit umweltfeindlichen Schadstoffen, wie z. B. Schwermetallen und deren Verbindungen, in einem Schmelzofen bis auf 1350 °C erhitzt. Die dabei verdampfenden giftigen chemischen Verbindungen und Elemente werden über einen Abzug aus dem Schmelzofen entfernt, kondensiert und ausgetragen. Der nicht verdampfte Rückstand wird sukzessive eingeschmolzen und die Schmelze kontinuierlich oder intermittierend aus dem Reaktionsraum ausgetragen und zur Erstarrung gebracht. Zum Erhitzen sind im Gasraum des Schmelzofens elektrische Heizvorrichtungen vorgesehen. Diese sind von der Ofenatmosphäre durch keramische Schutzrohre getrennt. Schmelzöfen dieser Art haben sich in der Praxis sehr gut bewährt, weisen jedoch eine noch unbefriedigende Durchsatzleistung auf.

DARSTELLUNG DER ERFINDUNG

Ausgehend vom Bekannten liegt der Erfindung die Aufgabe zugrunde, einen Schmelzofen zur thermischen Behandlung von schwermetallhaltigen und/oder dioxinhaltigen Sonderabfällen anzugeben, der eine signifikante Erhöhung der Schmelzleistung ermöglicht.

Diese Aufgabe wird erfindungsgemäss dadurch gelöst, dass dass dass neben der ersten Heizvorrichtung im Gasraum des Schmelzofens oberhalb der Schmelze eine unmittelbar auf die Schmelze einwirkenden zweite Heizvorrichtung vorgesehen ist.

Erst die Kombination von zwei Heizsystemen - ein System heizt den Oberofen oberhalb der Schmelze und den oberflächigen Bereich der Schmelze auf, das andere System heizt die Schmelze unmittelbar auf - ermöglicht eine deutliche Leistungssteigerung. Der Erfindung liegen dabei die folgenden Ueberlegungen zugrunde:

Setzt man voraus, dass der Reststoffeintrag wie üblich oberhalb des Schmelzbereichs erfolgt, so ist das Heizsystem des Oberofens erforderlich, um eine zumindest teilweise offene Badoberfläche zu ermöglichen, und damit das freie Abdampfen von Schwermetallen, Schwermetallverbindungen und organischen Komponenten zu gewährleisten. Wird die Schmelze nur von unten beheizt, so liegt ein sogenannter "cold top melter" vor, bei dem z.B. abdampfende Schwermetallverbindungen im darüberliegenden noch ungeschmolzenen Gemenge wieder kondensieren und sich letztlich im Glas anreichern. Die Salze sammeln sich in einer Schicht ("Galle"), welche auf der Schmelze schwimmt und als Sondermüll abgezogen und behandelt werden muss. Auch eine Zerstörung der organischen Schadstoffe ist nicht gesichert. Nur über eine offene Badoberfläche ein für das Recycling interessantes Konzentrat und ein möglichst schwermetallarmes Glas gewonnen werden.

Eine Ofenheizung allein im Oberbau des Schmelzofens erlaubt nur eine mässige Schmelzleistung pro Ofenfläche. Dies ist unter anderem darauf zurückzuführen, dass die Schmelze aus derartigen Sonderabfällen typischerweise dunkelbraun bis schwarz ist, und deshalb der Wärmefluss im Bad und damit die Leistungszufuhr in den Eintragbereich, in welcher ein Grossteil der gesamten Leistung benötigt wird, gering ist. Eine wesentliche Verbesserung bringt hier die Heizung im Bad selber, die zum einen Energie in der Nähe des Hauptverbrauchers zuführt, zum anderen auch Strömungen im Bad initiiert, die zu einer drastischen Verbesserung des Wärmetransportes führen. So erhält man eine signifikante Erhöhung der spezifischen Schmelzleistung. Darüber hinaus erlaubt es eine direkt auf das Bad einwirkende Heizung, die Temperatur im Ofenoberbau etwas zu reduzieren, was die dortigen Wärmeverluste verringert und die Lebensdauer der Materialien, insbesondere der Heizvorrichtung, erhöht.

Zwar ist es im Zusammenhang mit Wannenöfen in der Glasindustrie bekannt, neben einer direkt auf das Schmelzbad einwirkenden Widerstandheizung zur Aufheizung Zusatzbrenner oberhalb des Schmelzbades vorzusehen (LUEGER Bd.16 "Lexikon der Verfahrentechnik" DVA Stuttgart 1970, S.199,200). Diese Zusatzbrenner sind nur deshalb notwendig, weil das zu schmelzende Glas erst bei hohen Temperaturen eine hohe elektrische Leitfähigkeit aufweist. Für den eigentlichen Prozess werden diese Zusatzbrenner nicht benötigt.

KURZE BESCHREIBUNG DER ZEICHNUNGEN

Die Erfindung wird nachstehend anhand eines Ausführungsbeispiels eines Schmelzofens zur thermischen Behandlung von schwermetallhaltigen und/oder dioxinhaltigen Sonderabfällen erläutert. Es zeigen:

Fig.1 einen Längsschnitt Schnitt durch einen Schmelzofen mit zwei verschiedenen Heizsystemen;

Fig.2 einen Querschnitt durch den Schmelzofen gemäss Fig.1 längs deren Linie AA;

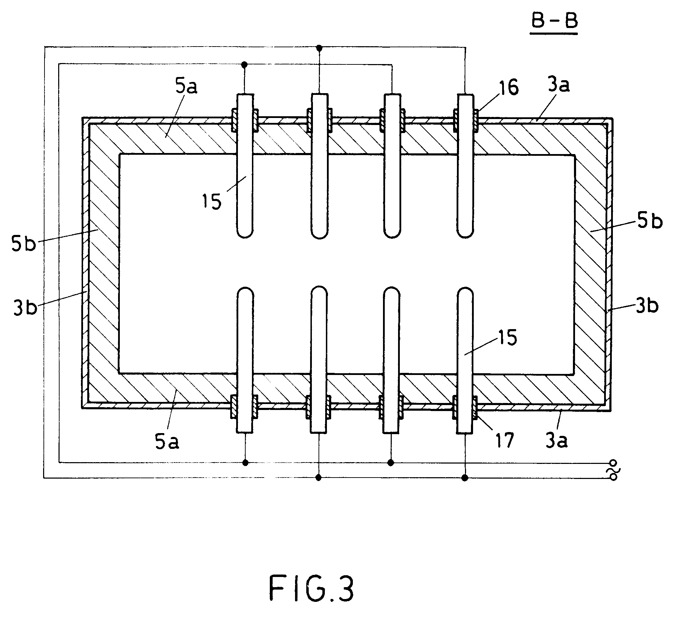

Fig.3 einen Horizontalschnitt durch den Schmelzofen gemäss Fig.1 längs deren Linie BB.

## WEGE ZUR AUSFÜHRUNG DER ERFINDUNG

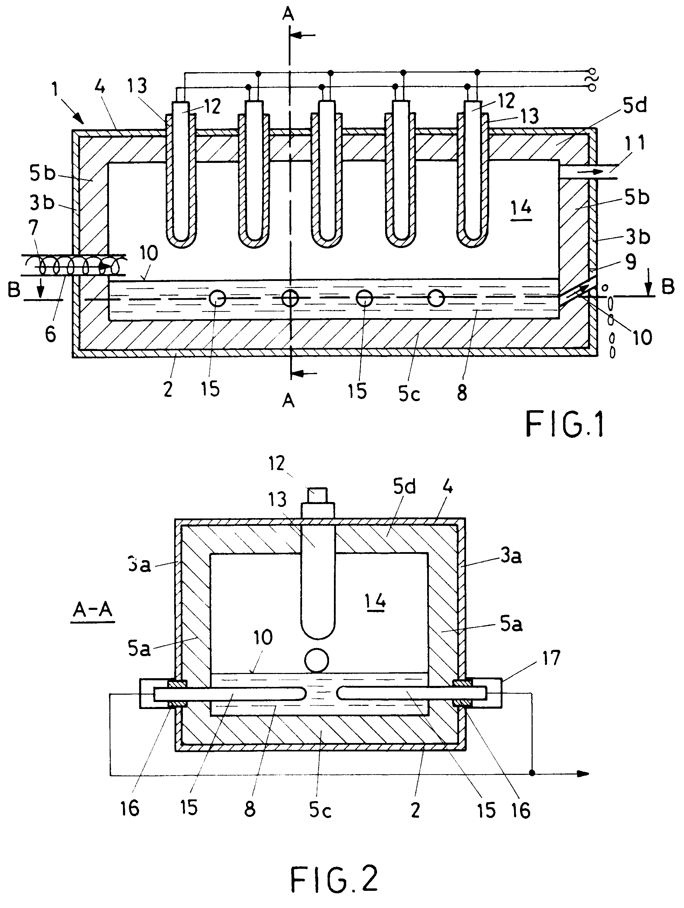

In Fig. 1 ist mit 1 ein Schmelzofen bezeichnet. In einem metallischen Gehäuse sind Bodenwand 2, Seitenwänden 3a, 3b und Decke 4 mit einer Ausmauerung 5 mit Seitenwänden 5a, 5b und Boden 5c und Decke 5d aus Feuerfestmaterial, wie es beispielsweise im Glasschmelzofenbau verwendet wird. Der untere Teil des Gefässinneren bildet die Schmelzwanne. Der zu behandelnde Filterstaub wird der Wanne über einen Einlass 6 Eintragvorrichtung, z.B. eine Förderschnecke 7, an einer Stirnwand des Ofens zugeführt, die Schmelze 8 verlässt den Ofen über einen Ueberlaufkanal 9 an der gegenüberliegenden Stirnwand. Das Niveau 10 der Schmelze liegt dabei unterhalb der Förderschnecke 7 und wenig oberhalb des Ueberlaufkanals 9. Die durch die thermische Behandlung freigesetzten bzw. umgesetzten flüchtigen Stoffe verlassen den Ofen über einen Gasauslass 11, welcher im oberen Bereich der dem Einlass 6 gegenüberliegenden Stirnwand oder in der Decke 4 angeordnet ist.

Eine erste Heizvorrichtung in Form elektrischer Heizelemente 12, welche von Schutzrohren 13 auf Keramik-Basis ummantelt sind, ragt von oben her in den Gasraum 14 des Ofens hinein, ohne in die Schmelze 8 einzutauchen.

Ein Schmelzofen, wie er im vorstehenden beschrieben wurde, das Verfahren zu seinem Betrieb, die sich im Ofen abspielenden Prozesse, sowie die Weiterbehandlung des den Ofen über den Gasauslass 11 verlassenden flüchtigen Substanzen ist Gegenstand der EP-A-0 313 902 oder EP-A-0359 931, auf welche hiermit zwecks Vermeidung von Wiederholungen ausdrücklich Bezug genommen wird.

Aus den im einleitenden Teil aufgeführten Gründen lässt sich nun bei einem deratigen Schmelzofen die Schmelzleistung wesentlich erhöhen, wenn erfindungsgemäss neben der Heizvorrichtung 12 im Gasraum 14 oberhalb der Schmelze 8 eine unmittelbar auf die Schmelze einwirkende Widerstandsheizung vorgesehen ist, bei welcher die Schmelze 8 selbst den Leiter bildet. Zu diesem Zweck sind in den Längswänden des Schmelzofens 1 Badelektroden 15 aus Molybdän oder Wolfram oder einer geeigneten hochtemperaturbeständigen Legierung vorgesehen. Diese ragen bei einer lichte Weite der Wanne von typisch 600 mm etwa 250 mm in die Schmelze hinein. Ihre vertikale Position ist so gewählt, dass sie in einer Höhe von etwa der halbe Tiefe bis zwei Dritteln der Tiefe der Schmelze 8 liegen. Die Badelektroden 15 sind in keramischen Durchführungen 16 in den Längswänden 3a Ofens in Elektrodenlängsrichtung verstellbar gehalten. Nur in Fig.2 eingezeichnete Hauben 17, welche sich auf den keramischen Durchführungen 16 abstützen und dort gehalten sind, kapseln die Badelektroden 15 gegen die Umgebung ab. Die Hauben 17 sind mit Inertgas gefüllt, das die freien Elektrodenenden gegen Korossion schützt. Im Bedarfsfall können die Elektroden durch ein flüssiges oder gasförmiges Kühlmittel gekühlt werden.

Die Badelektroden 15 sind elektrisch so geschaltet, dass je zwei gegenüberliegende Badelektroden 15 auf gleichem elektrischen Potential, unmittelbar benachbarte Badelektroden 15 auf unterschiedlichem Potential liegen. Auf diese Weise erfolgt eine Widerstandsheizung in der (bei hohen Temperaturen elektrisch gut leitenden) Schmelze, welche nicht nur Wärme unmittelbar in die Schmelze 8 einbringt, sondern infolge der durch den Stromfluss initiierten Badbewegung in der schmelze den Wärmeaustausch in der Schmelze verbessert. Durch Passivierung der Badelektroden durch ein der speisenden Wechselspannung überlagertes Gleichspannungspotential kann in bekannter Weise der Elektrodenverschleiss verringert werden.

Versuchsergebnisse bei Betrieb eines erfindungsgemässen Schmelzofens mit Filterstaub in einer Kehrichtverbrennungsanlage haben den positiven Effekt zweier Heizsysteme vollumfänglich bestätigen können:

Der Versuchsofen war mit 30 Heizvorrichtungen à 4 kW im Gasraum 14 und 8 Badelektroden 15, welche eine Leistung von etwa 80 kW in der Schmelze freisetzen konnten, ausgerüstet. Bei Heizung nur mit den elektrischen Heizelemente 12 im Gasraum 14 und einer Temperatur im Gasraum von etwa 1350°C betrug die maximale Durchsatzleistung 70 kg Filterstaub pro Stunde. Waren beide Heizsystem im Betrieb, betrug die maximale Durchsatzleistung 150 kg/h bei einer Temperatur im Gasraum von 1320°C. Mit einem Heizsystem allein mit Badelektroden 15 lässt sich das Verfahren wegen "cold top melter" nicht realisieren.

Die Erfindung ist selbstverständlich nicht auf das Ausführungsbeispiel beschränkt. So können anstelle von seitlich in die Schmelze 8 hineinragenden Badelektroden 15 auch solche verwendet werden, welche im Boden 2 angeordnet sind und von unten her in die die Schmelze 8 hineinragen. Anstelle von Badelektroden 15 können auch Widerstandselektroden eingesetzt werden, wie sie im Gasraum 14 oberhalb der Schmelze 8 eingesetzt werden. Weiterhin ist es möglich, ganz oder teilweise in die Bodenpartie 5a der Ausmauerung 5 eingebettete Heizeinrichtungen einzusetzen.

**Patentansprüche**

1.  Schmelzofen zur thermischen Behandlung von schwermetallhaltigen und/oder dioxinhaltigen Sonderabfällen, mit einem Ofengefäss (1), das eine Schmelzwanne zur Aufnahme einer Schmelze (8), mindestens eine Beschickungsvorrichtung (6,7) für die Zufuhr des zu behandelnden Gutes, mindestens einen von der Beschickungsvorrichtung (6,7) räumlich distanzierten Schmelzaustrag (9), mindestens eine in das Gefässinnere hineinragende erste Heizvorrichtung (12) und mindestens einen Abgasauslass (11) aufweist, dadurch gekennzeichnet, dass dass neben der ersten Heizvorrichtung (12) im Gasraum (14) des Schmelzofens oberhalb der Schmelze (8) eine unmittelbar auf die Schmelze einwirkende zweite Heizvorrichtung (15) vorgesehen ist.

2.  Schmelzofen nach Anspruch 1, dadurch gekennzeichnet, dass die zweite Heizvorrichtung als Widerstandsheizvorrichtung (15) ausgebildet ist, bei welcher die Schmelze (8) selbst den Heizleiter bildet.

3.  Schmelzofen nach Anspruch 2, dadurch gekennzeichnet, dass die Widerstandsheizvorrichtung von Wechselstrom gespeiste Badelektroden (15) sind, welche vorzugsweise an beiden Längsseiten des Ofengefässes angeordnet sind und in die Schmelze (8) hineinreichen.

4.  Schmelzofen nach Anspruch 3, dadurch gekennzeichnet, dass die Badelektroden (15) aus einem hochtemperaturfesten Material, vorzugsweise Molybdän, bestehen.

5.  Schmelzofen nach Anspruch 3 oder 4, dadurch gekennzeichnet, dass in Ofenlängsrichtung gesehen benachbarte Badelektroden (15) jeweils auf unterschiedlichem elektrischem Potential liegen, während gegenüberliegende Badelektroden (15) auf gleichem elektrischem Potential liegen.

6.  Schmelzofen nach einem der Ansprüche 3 bis 5, dadurch gekennzeichnet, dass die Badelektroden (15) in Längsrichtung verschiebbar sind und etwa 50% bis 80% der halben Badbreite in die Schmelze (8) hineinreichen.

7.  Schmelzofen nach einem der Ansprüche 3 bis 6, dadurch gekennzeichnet, dass die Badelektroden (15) von aussen gekühlt sind.

8.  Schmelzofen nach einem der Ansprüche 3 bis 7, dadurch gekennzeichnet, dass das aussen überstehende Ende der Badelektroden (15) von einer Haube (17) abgedeckt ist, welche Haube (17) mit Inertgas, vorzugsweise Stickstoff, gefüllt ist.

FIG.1

A-A

FIG.2

B – B

FIG.3

Europäisches
Patentamt

**EUROPÄISCHER RECHERCHENBERICHT**

Nummer der Anmeldung

EP 90 12 2725

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3 825 984 (MANNESMANN)<br>* Spalte 1, Zeilen 20-25; Ansprüche *<br>--- | 1,2 | F 27 B 14/06<br>H 05 B 3/60<br>C 21 B 7/02 |
| A | US-A-2 659 764 (W. KÖNIG)<br>* Ansprüche; Figuren *<br>--- | 1,2,3,6,7 | |
| A,D | EP-A-0 313 902 (BBC BROWN BOVERI)<br>* Ansprüche; Figuren *<br>--- | 1 | |
| A | DE-C- 269 786 (W. RODENHAUSER)<br>--- | | |
| A | FR-E- 11 360 (M. SAUVAGEON)<br>----- | | |

**RECHERCHIERTE SACHGEBIETE (Int. Cl.5)**

F 27 B
H 05 B
C 21 B

Der vorliegende Recherchenbericht wurde für alle Patentansprüche erstellt

| Recherchenort | Abschlußdatum der Recherche | Prüfer |
|---|---|---|
| DEN HAAG | 29-07-1991 | COULOMB J.C. |

EPO FORM 1503 03.82 (P0403)